# FASCICULE DE BREVET EUROPEEN

(11) **EP 2 969 749 B1**
(45) Date de publication et mention de la délivrance du brevet: **22.08.2018**
(21) Numéro de dépôt: 14710238.8
(22) Date de dépôt: 12.03.2014
(51) Int. Cl.: B64C 25/26

(54) **TREIN D'ATTERRISSAGE D'AÉRONEF MUNI D'UN GALET RÉGLABLE**
FAHRWERK AUSGESTATTET MIT EINSTELLBAREN VERRIEGELUNGSROLLER
LANDING GEAR PROVIDED WITH ADJUSTABLE LOCKING ROLLER

(30) Priorité: 12.03.2013 FR 1352208
(43) Date de publication de la demande: 20.01.2016
(73) Titulaire: Safran Landing Systems, 78140 Vélizy-Villacoublay (FR)
(72) Inventeur: LA COMMARA, Domenico, F-78140 Velizy-Villacoublay (FR); FAURE, Thibault, F-78140 Velizy-Villacoublay (FR)
(74) Mandataire: Lavialle, Bruno François Stéphane
(86) Numéro de dépôt international: PCT/EP2014/054897
(87) Numéro de publication internationale: WO 2014/140139

(56) Documents cités:
- EP-A1- 1 016 590
- GB-A- 531 750
- GB-A- 704 080
- US-A- 2 504 458
- US-A- 2 621 004

## Description

L'invention concerne un atterrisseur d'aéronef muni d'un galet réglable pour son accrochage en position repliée dans une soute de l'aéronef.

### ARRIERE-PLAN TECHNOLOGIQUE DE L'INVENTION

Les atterrisseurs sont en général retenus en position repliée par un crochet installé dans la soute qui crochète un galet porté par l'atterrisseur lorsque celui-ci arrive en position repliée. Compte tenu des déformations, des jeux de montages et des tolérances d'usinage, il est nécessaire de prévoir une possibilité de réglage de la position du galet, afin de garantir que le crochet puisse crocheter le galet à tous les coups. En général, le galet est monté sur un support qui est rapporté sur l'un des éléments de l'atterrisseur au moyen d'un boulon ou d'une vis de reprise d'effort qui s'étend avec un jeu au travers d'un orifice du support de sorte que celui-ci peut être déplacé latéralement pour régler la position du galet. Une fois la bonne position du galet trouvé, on serre alors des vis d'immobilisation du support sur l'atterrisseur. Il est également possible d'interposer des cales entre le support et l'élément de l'atterrisseur pour régler la hauteur du galet. Un exemple selon l'art antérieure est montré dans le document US 2 504 458.

### OBJET DE L'INVENTION

L'invention a pour objet de proposer des moyens de réglage de la position du galet faciles à mettre en oeuvre par l'équipe chargée du réglage du galet.

### PRESENTATION DE L'INVENTION

A cet effet, on propose un atterrisseur d'aéronef destiné à être monté mobile sur ce dernier entre une position déployée et une position repliée, l'atterrisseur comportant un galet porté par un support solidarisé à l'atterrisseur tout en étant déplaçable par rapport à celui-ci, dans lequel, selon l'invention, le support est monté pivotant sur l'atterrisseur.

Hormis la hauteur du galet, qui se règle en général avec des cales, le réglage de la position du galet se fait en général selon une direction privilégiée de réglage. Il suffit de faire en sorte de monter le support pivotant selon un axe normal à la direction privilégiée de réglage. Le pivotement du support permet alors de déplacer très facilement le galet selon la direction privilégiée de réglage (avec une petite composante transversale, qui peut en tout état de cause être rattrapée par des cales).

Selon un mode de réalisation préféré, le support est solidarisé à un axe d'articulation de l'atterrisseur. Ainsi, il suffit de faire tourner l'axe d'articulation pour faire pivoter le support. De préférence alors, le support est solidarisé à l'axe au moyen d'une vis de reprise qui traverse une paroi de l'axe et qui est vissé dans un écrou glissé à l'intérieur de l'axe. De préférence alors, l'axe est associé à des moyens de réglage de sa position angulaire.

### DESCRIPTION DES FIGURES

L'invention sera mieux comprise à la lumière de la description qui suit d'un mode particulier de réalisation de l'invention, en référence aux figures des dessins annexés, parmi lesquelles :
- la figure 1 est une vue en perspective d'une partie d'un atterrisseur équipé d'un galet et de son support selon l'invention ;
- la figure 2 est une vue en coupe longitudinale de l'axe portant le support du galet ;
- la figure 3 est une vue en perspective partielle de l'atterrisseur illustrant l'organe de réglage de la position angulaire de l'axe ;
- la figure 4 est une vue de détail agrandie de l'organe de réglage de la position angulaire de l'axe ;
- la figure 5 est une vue de côté avec coupe partielle montrant le support du galet sur son axe, ainsi que l'amplitude de réglage angulaire du galet.

### DESCRIPTION DETAILLEE D'UN MODE DE REALISATION PARTICULIER

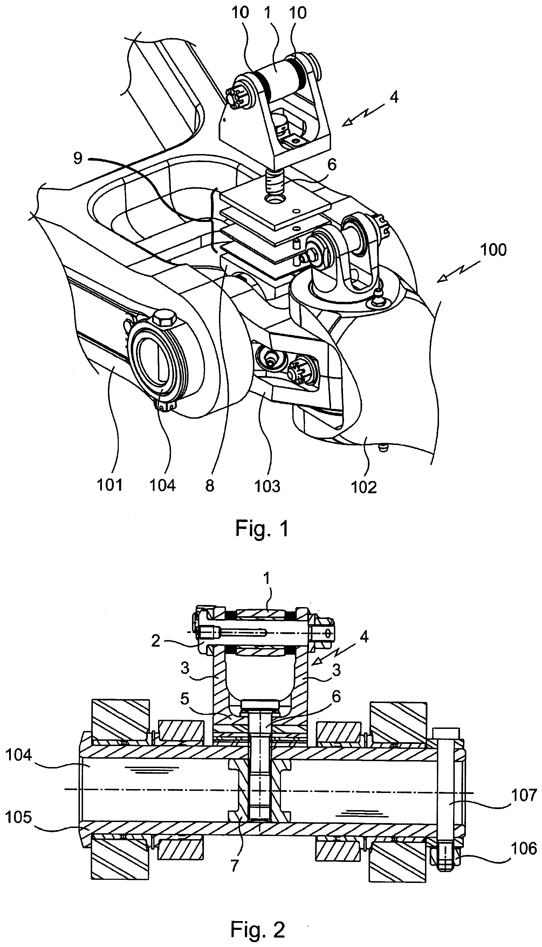

La figure 1 illustre une contrefiche 100 d'un atterrisseur auxiliaire d'avion commercial. On reconnaît le panneau supérieur 101 de la contrefiche, et le bras inférieur de contrefiche 102. Les deux éléments de contrefiche sont reliés entre eux au moyen d'un cardan 103 qui est articulé sur le panneau supérieur 101 au moyen d'un axe d'articulation 104 formant l'articulation de genou de la contrefiche.

L'atterrisseur est ici équipé d'un galet 1 qui est enfilé sur une broche 2, elle-même montée entre deux joues 3 d'un support 4. Le support 4 comporte une embase 5 à fond plat qui est percée pour permettre le passage d'une vis de reprise d'effort 6.

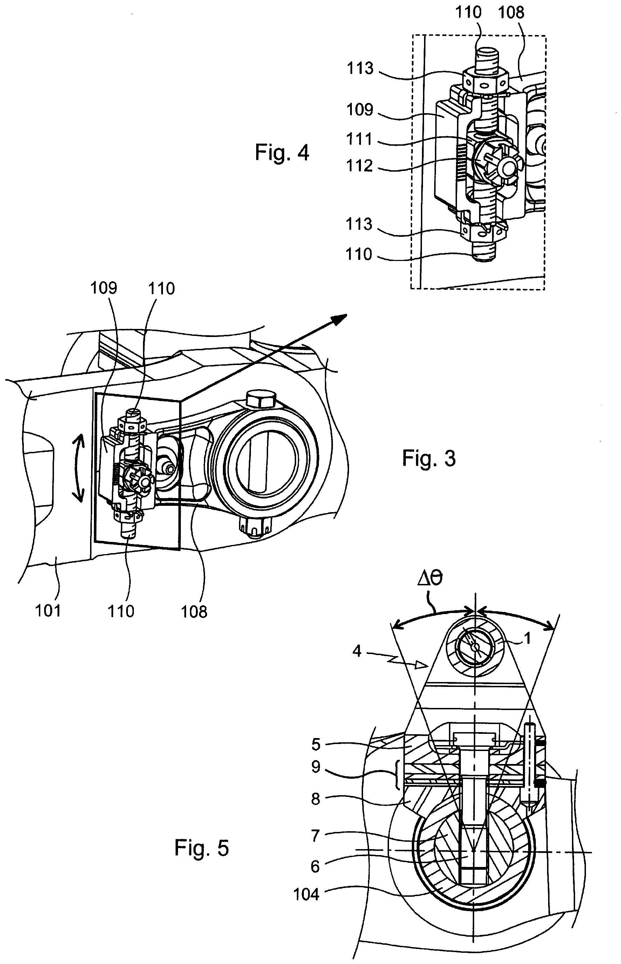

Conformément à l'invention, et comme cela est plus particulièrement visible à la figure 2 et à la figure 5, le support 4 est rapporté sur l'axe d'articulation 104. A cet effet, un écrou 7 a été introduit dans l'axe d'articulation 104 pour recevoir la vis de reprise d'effort 6. Entre l'embase 5 et l'axe 104 ont été interposées d'une part une cale de forme 8 pour permettre l'appui de l'embase 5 sur l'axe 104, et d'autre part des cales d'épaisseur 9 qui sont destinées à régler la hauteur du galet 1. Ainsi, il suffit de tourner l'axe d'articulation 104 par rapport au panneau 101 de contrefiche pour faire bouger le galet dans une plage angulaire Δθ. Le réglage du galet 1 est alors simplifié. La vis 6 solidarise fermement le support 4 à l'axe d'articulation 104, et, quelque soit la position du galet 1, reste alignée avec le galet 1.

Pour régler la position latérale du galet 1 sur la broche 2, il convient d'intercaler des cales 10 de part et d'autre du galet 1 pour positionner celle-ci le long de la broche 2.

Selon un aspect avantageux de l'invention illustré aux figures 3 et 4, on équipe l'axe d'articulation 104 de moyens de réglage de sa position angulaire. Plus précisément, l'axe d'articulation 104 comprend d'un côté une tête 105 pour son arrêt axial, et porte de l'autre côté une virole 106 qui est rapportée sur l'axe 104 et arrêtée par une broche 107. L'arrêt de la virole 106 par la broche 107 réalise à la fois un arrêt axial et une indexation angulaire. La virole 106 est prolongée par un levier 108 qui se termine par une cage 109 sur laquelle deux vis de réglage 110 sont vissées pour saillir à l'intérieur de la cage 109. Les vis de réglage 110 s'étendent en regard l'une de l'autre et coopèrent avec un massif 111 qui s'étend en saillie du panneau de contrefiche 101. Ici, le massif 111 est rapporté sur le panneau de contrefiche 101 au moyen d'un boulon 112. En vissant plus ou moins les deux vis de réglage 110, tout en s'assurant qu'elles restent toutes deux au contact du massif 111, il est ainsi possible de déplacer le levier 108 par rapport au massif 111 et donc de faire varier la position angulaire de l'axe d'articulation 104 par rapport au panneau de contrefiche 101 de façon très précise. L'immobilisation en position est réalisée au moyen de deux contre-écrous 113 qui viennent immobiliser les vis de réglage 110 sur la cage 109.

L'invention n'est pas limitée à ce qui vient d'être décrit, mais englobe au contraire toute variante entrant dans le cadre des revendications.

En particulier, bien que dans l'exemple illustré le galet soit solidarisé à un axe d'articulation de l'atterrisseur (en l'occurrence l'axe de genou de contrefiche), qui est un axe structural de l'atterrisseur, l'invention n'est pas limitée à l'utilisation de tels axes d'articulation, et on pourra prévoir le montage d'un axe dédié permettant le déplacement angulaire du galet.

## Revendications

1. Atterrisseur d'aéronef destiné à être monté mobile sur l'aéronef entre une position déployée et une position repliée, l'atterrisseur comportant un galet (1) pour le crochetage de l'atterrisseur en position repliée, le galet étant porté par un support (4) solidarisé à l'atterrisseur tout en étant déplaçable par rapport à celui-ci, **caractérisé en ce que** le support est monté pivotant sur l'atterrisseur.

2. Atterrisseur selon la revendication 1, dans lequel le support est solidarisé à un axe d'articulation (104) articulant deux éléments (101, 102) de l'atterrisseur.

3. Atterrisseur selon la revendication 2, dans lequel l'axe d'articulation est équipé de moyens de réglage (108, 109, 110) de sa position angulaire.

4. Atterrisseur selon la revendication 3, dans lequel les moyens de réglage comportent un levier (108) solidaire de l'axe d'articulation et terminée par une cage (109) portant deux vis de réglage (110) montées en regard l'une de l'autre pour coopérer avec un massif solidaire de l'un des éléments (101) de l'atterrisseur articulé par l'axe d'articulation.

5. Atterrisseur selon la revendication 1, dans lequel le support comporte deux joues (3) portant une broche (2) sur laquelle le galet (1) est enfilé.

6. Atterrisseur selon la revendication 1, dans lequel le support comporte une embase (5) à fond plat, une cale de forme (8) étant interposée entre l'embase et un axe (104) auquel le support est solidarisé.

7. Atterrisseur selon la revendication 6, dans lequel le support est solidarisé à l'axe au moyen d'une vis de reprise d'effort qui traverse l'embase et qui est vissée dans un écrou (7) introduit à l'intérieur de l'axe.

## Patentansprüche

1. Luftfahrzeugfahrwerk, das dazu bestimmt ist, beweglich an einem Luftfahrzeug zwischen einer ausgefahrenen Position und einer eingefahrenen Position gelagert zu werden, wobei das Fahrwerk eine Rolle (1) zum Einhaken des Fahrwerks in der eingefahrenen Position umfasst, wobei die Rolle von einem Träger (4) getragen wird, der mit dem Fahrwerk verbunden ist, während er in Bezug auf dasselbe beweglich ist, **dadurch gekennzeichnet, dass** der Träger schwenkbar am Fahrwerk gelagert ist.

2. Fahrwerk nach Anspruch 1, bei dem der Träger mit einer Gelenkverbindungsachse (104) verbunden ist, die zwei Elemente (101, 102) des Fahrwerks gelenkig miteinander verbindet.

3. Fahrwerk nach Anspruch 2, bei dem die Gelenkverbindungsachse mit Einstellmitteln (108, 109, 110) zum Einstellen ihrer Winkelposition ausgestattet ist.

4. Fahrwerk nach Anspruch 3, bei dem die Einstellmittel einen Hebel (108) umfassen, der mit der Gelenkverbindungsachse verbunden ist und mit einem Käfig (109) abschließt, der zwei Stellschrauben (110) trägt, die einander gegenüberliegend angeordnet sind, um mit einem Block zusammenzuwirken, der mit einem der Elemente (101) des Fahrwerks verbunden ist, das über die Gelenkverbindungsachse angelenkt ist.

5. Fahrwerk nach Anspruch 1, bei dem der Träger zwei Seitenwände (3) umfasst, die eine Spindel (2) tragen, auf die die Rolle (1) aufgeschoben ist.

6. Fahrwerk nach Anspruch 1, bei dem der Träger eine Basis (5) mit Flachboden umfasst, wobei ein Formkeil (8) zwischen der Basis und einer Achse (104) angeordnet ist, mit der der Träger verbunden ist.

7. Fahrwerk nach Anspruch 6, bei dem der Träger mit der Achse mittels einer Kraftaufnahmeschraube verbunden ist, die die Basis durchsetzt und in eine Mutter (7) geschraubt ist, die ins Innere der Achse eingefügt ist.

## Claims

1. Aircraft undercarriage intended to be mounted on the aircraft so that it can be moved between a deployed position and a retracted position, the undercarriage including a roller (1) for hooking up the undercarriage in the retracted position, the roller being carried by a support (4) which is secured to the undercarriage and movable relative thereto, **characterized in that** the support is pivotably mounted on the undercarriage.

2. Undercarriage according to claim 1, wherein the support is secured to a hinge pin (104) articulating two elements (101, 102) of the undercarriage.

3. Undercarriage according to claim 2, wherein the hinge pin is equipped with means (108, 109, 110) for adjusting its angular position.

4. Undercarriage according to claim 3, wherein the adjusting means comprise a lever (108) secured to the hinge pin and terminated by a cage (109) carrying two adjusting screws (110) mounted facing one another for cooperating with a block secured to one of the elements (101) of the undercarriage articulated by the hinge pin.

5. Undercarriage according to claim 1, wherein the support includes two cheeks (3) carrying an arbour (2) on which the roller (1) is threaded.

6. Undercarriage according to claim 1, wherein the support includes a base (5) with a flat bottom, a shaping shim (8) being disposed between the base and a shaft (104) to which the support is secured.

7. Undercarriage according to claim 6, wherein the support is secured to the shaft by means of a force-absorbing screw which passes through the base and is screwed into a nut (7) inserted in the shaft.
